# EUROPEAN PATENT APPLICATION

(11) **EP 2 594 379 A1**
(43) Date of publication of application: **22.05.2013**
(21) Application number: 11382346.2
(22) Date of filing: 15.11.2011
(51) Int. Cl.: B29B 17/02, B29L 30/00

(54) **Removal device and method for removing thread band from a tire or part thereof**

(71) Applicant: GOMAVIAL SOLUTIONS, S.L., 20018 Donosti - San Sebastián (ES)
(72) Inventor: Romero Marion, Leandro, 20018 Donostia - San Sebastian (ES); Mateos Torrero, Alexander, 20018 Donostia - San Sebastian (ES); Ferrón Celma, Pablo, 20018 Donostia - San Sebastian (ES)
(74) Representative: ABG Patentes, S.L.

(57) **Abstract**

The present invention describes a device which allows removing tread band (K) from a tire (N) or part of a tire allowing the subsequent use thereof as an independent product in other industries. The method allowing such removal is also an object of the invention.

## Description

### Object of the Invention

The present invention describes a device which allows removing tread band from a tire or part of a tire allowing the subsequent use thereof as an independent product in other industries. The method allowing such removal is also object of the invention.

### Background of the Invention

Recycling tires disposed of each year is of great importance today since they make up one of the largest wastes in civilized societies. Thus, more than 230,000 tons of worn tires are generated each year in Spain.

At least three main layers must be provided in the tire manufacturing process: the tread band, sometimes also called KM band, formed by textile fibers embedded in rubber or only rubber in truck tires; the metal mesh, formed by a generally oblique framework of wires; and the casing on which the other two layers are arranged. As indicated by the name, the fibers of the casing in radial tires are radial fibers. Depending on the type of vehicle, the tire can contain more than one metal mesh and more than one tread layer. After manufacturing the tire these layers are not distinguished through an inner separation surface but rather are embedded in the rubber and spaced from one another providing different resistance functions to the overall tire performance.

When the outer tread band has lost the groove depth needed for proper traction with the asphalt, the tire is disposed of.

In the state of the art, there are different alternatives for proceeding with these used tires, such as for example:
- Technologies outside material recycling systems, which include recapping, making use of the metal casing of the tire.
- Mechanical treatments where the tire is ground.
- Size reduction technologies by means of milling which allows obtaining rubber powder. The processes applied can be mechanical processes at room temperature, or cryogenic or wet milling.
- Regeneration technologies: recovering or reclaiming and devulcanizing.
- Other technologies such as pyrolysis and thermolysis.

The most common solutions, for example, are therefore based on completely grinding used tires, subsequently removing their components using complex machines. Said machines follow a grinding process which requires a lot of energy, in addition to using large and expensive magnets for removing the metal mesh scrap.

The main technical problem solved by the present invention is to provide a simple and economical alternative in tire recycling. In the state of the art, a tire is considered a set of materials mixed in a complex manner from which the components thereof are to be reclaimed, searching for ways to separate each component.

The present invention allows obtaining new products from the tire or from a part thereof. It can be interpreted that tire manufacture is an initial manufacturing phase of these new products therefore the steps of the invention themselves complete these initial manufacturing steps until obtaining the desired product.

### Description of the Invention

The present invention proposes a set of steps, particularly applicable by means of a device such as that claimed in claim 1 for generating new products from a tire or parts thereof. Parts of the tire are included because it is possible that the tire has been previously worked on to remove some of its parts. As mentioned, the present invention starts from a complete tire or from a tire from which a component has been removed, such as the casing for example. For the sake of brevity, throughout the document the word tire will indiscriminately refer to the complete tire or to the tire even though it lacks some of its parts.

A removal device for removing tread band from a tire or part thereof is thus described, wherein *the device comprises:*
- *fixing means for fixing the tire, such that they allow the rotation of the tire about an axis perpendicular to its main plane*,
   It is necessary to initially place the tire in the removal device such that it is possible to secure the tire without preventing its rotation. The axis of rotation will be the center of the tire in the event that said tire is in the usual operating position or the axis is located in the centroid when the latter is deformed by being stretched and tensed.
- *a support comprising securing means for securing a section of tread band*,
   The device comprises elements capable of securing a section of tread band partially separated from the rest of the tire, wherein said elements are movable. This section can be obtained by making a pre-cut which allows generating this section where the means which will separate the tread band are fixed.
- *driving means for driving the support with respect to the securing means for pulling the tread band with respect to the tire when it is located in the fixing means in the operating mode*,
   The fixing means exert a securing force on the tire and the driving means for driving the support of the securing means cause a pulling. The fact that the driving is from the support with respect to the securing means implies that the inverse situation could arise, i.e., the driving means are in the support and tend to move such that they generate the pulling with respect to the securing means for securing the section of tread band. Pulling on the section of tread band causes the progressive separation of the tread band, two surfaces being generated converging at a ripping origin progressing through the rubber. These surfaces are located between the tread band and the lower structures. One surface is the surface associated with the band obtained and the other surface is the surface which results in the periphery of the tire structure remaining in the fixing support for fixing the tire. This pulling must be such that surfaces are generated without the fibers tearing or without the reinforcements and metal meshes either in the removed band or in the parts of the tire which are on the support emerging to the surface. The ripping origin can be aided by a cut, this cut aiding in a quicker and more efficient separation. The cut can be made prior to ripping or continuously and at the same time as the ripping, accompanying the pulling movement and thus aiding ripping and separating layers. The term ripping will be used throughout the description to designate the generation of a crack and the separation of the tread band from the metal mesh, aided or unaided by a cut.
   The driving means can be electric means, mechanical means, hydraulic means, etc.
- *the pulling direction imposed by the securing means on the tread band is such that it favors removing the tread band by ripping, separating the fibers of the tread band from the rest of the tire*.
   In the operating mode, the driving means combined with the tire fixing position must be such that the pulling direction is that which allows a continuous ripping, two surfaces being formed from the ripping origin progressing through the rubber without the embedded fibers in the material under each of these generated surfaces raising up (interpreting the term "under" in the sense of directed toward the material, being different for each of the surfaces). The use of this term "under" also does not exclude the possibility that some fibers are completely or partially exposed. Thus, the ripping progresses through the rubber leaving the fibers, both of the band obtained and those which are maintained in the tire structure, embedded under the generated surfaces. Several particular cases will be shown in the embodiments in which the best progress direction depending on the direction of the fibers of the metal mesh is described. The device is such that it establishes the means to carry out the continuous pulling in the direction established in accordance with the method according to a second aspect of the invention.

This second aspect of the invention comprises a removal method for removing tread band from a tire or part thereof (if some element has been previously separated as has been mentioned above, such as for example the casing), comprising the following steps:
*a. making one or more cuts of the tread band in a direction transverse to said tread band such that the depth of the cut precisely reaches the metal mesh of the tire*,
*b. making one or more cuts such that a first section of tread band separated from the rest of the tire is generated*,
   At least one cut is made in the tread band generating a section which allows securing the tread band for its subsequent pulling with respect to the rest of the tire. The cut is in a transverse direction to allow pulling which allows removing the tread band by ripping. This transverse cut can be oblique to facilitate, in some particular cases, the initial pulling and as has been mentioned, the cut can be continuous and at the same time as the ripping, accompanying the pulling movement and thus aiding ripping and separating layers.
*c. applying a pulling force on the section of tread band previously separated from the rest of the tire causing the progressive ripping of the tread band and maintaining pulling in one direction such that it has a projection perpendicular to the surface generated in the tire*.
   The previously ripped section of tread band is secured and said section is pulled in a direction having a projection perpendicular to the surface generated in the tire, which is in turn parallel to the main plane of the tire.
   Indicating that it must have a projection perpendicular to the surface generated in the tire is a way to express that the pulling must have a force component perpendicular to the surface immediately generated by ripping. This perpendicular force component is the separation component which allows the generated surfaces to progress by ripping.

An additional step will be provided in an embodiment, characterized in that
*at least in the case of a tire without textile fibers, it comprises the step of making two perimetral cuts, one on each sidewall of the tire, such that they laterally limit the extension of the ripping for the tread band*.

In the case of truck tires, in which there are no textile fibers in the tread band, it is necessary to make two perimetral cuts, one in each sidewall of the tire, to laterally limit the extension of the ripping. This step can be performed as the initial step in this method or can be performed previously if one starts from a tire from which some of its parts have already been removed, such as the casing for example. This step will not be necessary if the tread band has longitudinal textile fibers because due to their longitudinal arrangement, the ripping will progress following these fibers; in this case the separation will not be continuous and burr will form. If a cut is made in tires with textile fibers in the tread band, this cut facilitates the removal and allows a continuous and smooth separation.

The progression of generating separation surfaces by ripping is according to a perimetral direction, nevertheless, the fibers of both the tread band and those in structures immediately below one of the ripping surfaces (according to the radial direction of the tire), i.e., the metal mesh, are usually oblique. This oblique direction means that the fibers reach the sidewalls and it is in these sidewalls where an inadequate separation of the fibers can occur.

These perimetral cuts on the sidewalls, if they are made, laterally limit the extension of the progression of the separation surfaces generated as a result of the traction between the tread band and the metal mesh.

According to this method separating the tread band is achieved such that:
o The ripping progresses along the perimeter.
o On the sides, the generated ripping surfaces are limited, if they are made, by the perimetral cuts preventing new ripping surfaces starting from the ends of the cords or fibers reaching the sidewalls from being generated. If this were the case, the generated band would end with fibers or cords protruding from the band.
o The ripping results in two surfaces, one surface in the obtained band and another surface in the periphery of the tire structure which is in the fixing support for fixing the tire. The ripping progresses through the rubber leaving the fibers both of the obtained band and those which are maintained in the tire structure embedded under the generated surfaces; as mentioned, the term "under" does not exclude the possibility that some fibers are completely or partially exposed. In order to be progressive, the ripping will ideally be performed in a continuous and constant manner, although ripping at intervals would be possible.

### Description of the Drawings

The foregoing and other features and advantages of the invention will be better understood from the following detailed description of a preferred embodiment provided only by way of non-limiting illustrative example, in reference to the attached drawings.
Figure 1 shows a perspective view of a first embodiment of the device. In this example, the driving means move the fixing means for fixing the section of tread band away from or closer to the tire support and they allow pulling the tread band.
Figure 2 also shows a perspective view of the same embodiment and from another viewpoint where the way of moving the support of the securing means along guides driven by means of a rack and pinion assembly is seen.
Figure 3 is an elevational view of the embodiment of Figure 1.
Figure 4 is a plan view of the embodiment of Figure 1.
Figure 5 shows the development of the tread band, a projection of the underlying metal mesh embedded in the tread band also being depicted.
Figure 6 shows the development of the tread band of Figure 5 of a tire on which the cuts needed in an embodiment and the pulling direction for carrying out the first implementation method of the invention are identified. In this case, the perimetral cuts are made such that they do not transversely and outwardly exceed the edges of the metal mesh.
Figure 7 shows the development of the tread band of Figure 5 of a tire on which the cuts needed in another embodiment and the pulling direction for carrying out the second implementation method of the invention are identified. In this case, the perimetral cuts are made on the sidewall of the tire, such that it is irrelevant if said perimetral cuts radially and outwardly exceed the edges of the metal mesh. In this embodiment there is also a preferably central longitudinal cut.

### Detailed Description of the Invention

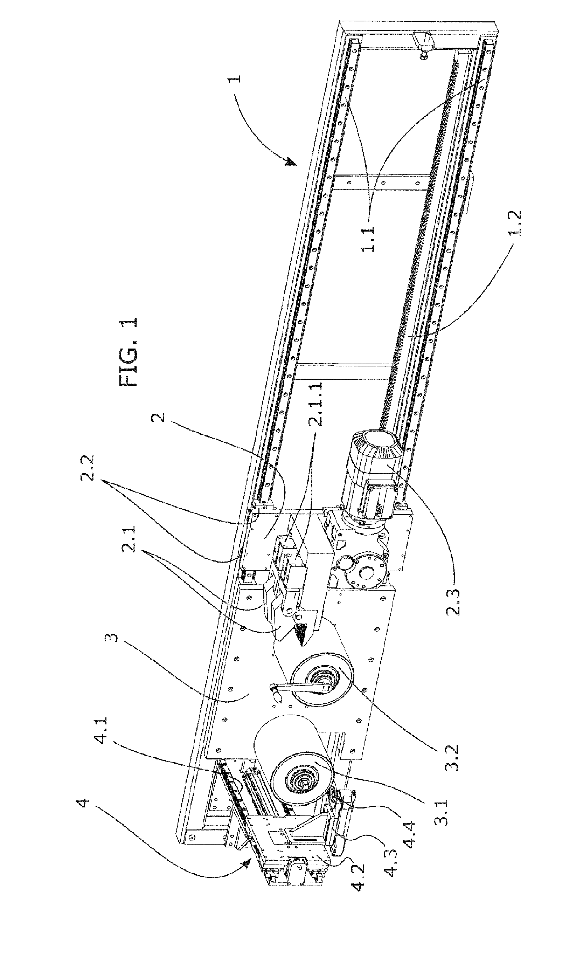

Figures 1 to 4 show different viewpoints of a device according to a first embodiment of the invention.

In this embodiment the different components of the device are supported on a frame (1) which functions as a structural support. The shape of the frame (1) according to this embodiment is mainly rectangular such that the longer sides are the horizontal sides.

Guides (1.1) which allow the horizontal sliding of a support (2) of securing means (2.1) which can be easily identified in the drawing because they are in the form of clamps extend on these longer sides. These clamps (2.1) allow gripping the section separated by cutting the tread band (K) and are operated by actuators (2.1.1).

The support (2) of the securing means (2.1) is driven by a motor (2.3) moving a pinion (2.3.1) which in turn meshes with a rack (1.2). The motor (2.3) operates the support which acts as a mobile carriage movable on slides (2.2). The support (2) could be driven by a hydraulic assembly instead of the rack (1.2) and pinion (2.3.1) assembly. The rack (1.2) extends parallel to the lower guide (1.1) allowing the support (2) to move horizontally and thus the securing means (2.1) are moved away from or closer to fixing means (3.1, 3.2) for fixing the tire.

The tread band (K) is removed by pulling a section of tread band (K) and it is carried out by means of this device moving the securing means (2.1) for securing the section of tread band (K) away from the tire which is retained in the fixing means (3.1, 3.2). The fixing means (3.1, 3.2) in this embodiment are formed by two rollers (3.1, 3.2), however it could also be a single expandable cylinder.

The tire is placed surrounding said rollers (3.1, 3.2) and the rollers (3.1, 3.2) are separated for its retention until said tire is tensed. The relative separation between the rollers (3.1, 3.2) can be provided by leaving a roller (3.1) fixed such that it is not movable and performing the movement by means of the other roller (3.2) which is movable, as has been established in this embodiment. However, it also possible that both rollers are movable with respect to one another. These rollers (3.1, 3.2) are located on a support (3) of the fixing means (3.1, 3.2) for fixing the tire, which in this embodiment is parallel to the main plane (P) of the tire (N).

There has been provided in this embodiment a main support (4) for the cutting tool (4.4) on the other side from where the securing means (2.1) of the section of tread band (K) are located. The cutting tool (4.4) can be a circular blade, a semicircular blade, a spatula blade or a spindle-shaped blade. Said cutting tool (4.4) is located on a positionable support (4.3) which is in turn fixed on a floating support (4.2) located in sliding means (4.1) allowing movement perpendicular to the main plane (P) of the tire (N). Said configuration allows making a cut in the tread band (K) in a transverse direction. The change of orientation of the positionable support (4.3) allows other cutting directions, such as a longitudinal cutting direction.

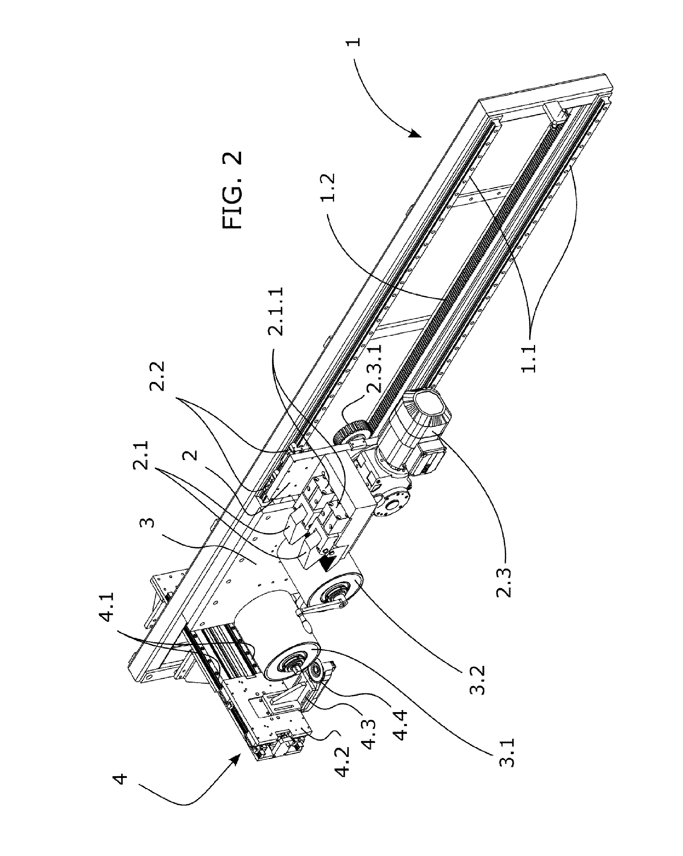

The same embodiment is also observed in Figure 2 in a perspective view, where the way to move the support (2) of the securing means along the guides (1.1) by means of the rack (1.2) and pinion (2.3.1) assembly is seen. It can be observed in this drawing how the movement occurs in this embodiment through the meshing between rack (1.2) and pinion (2.3.1).

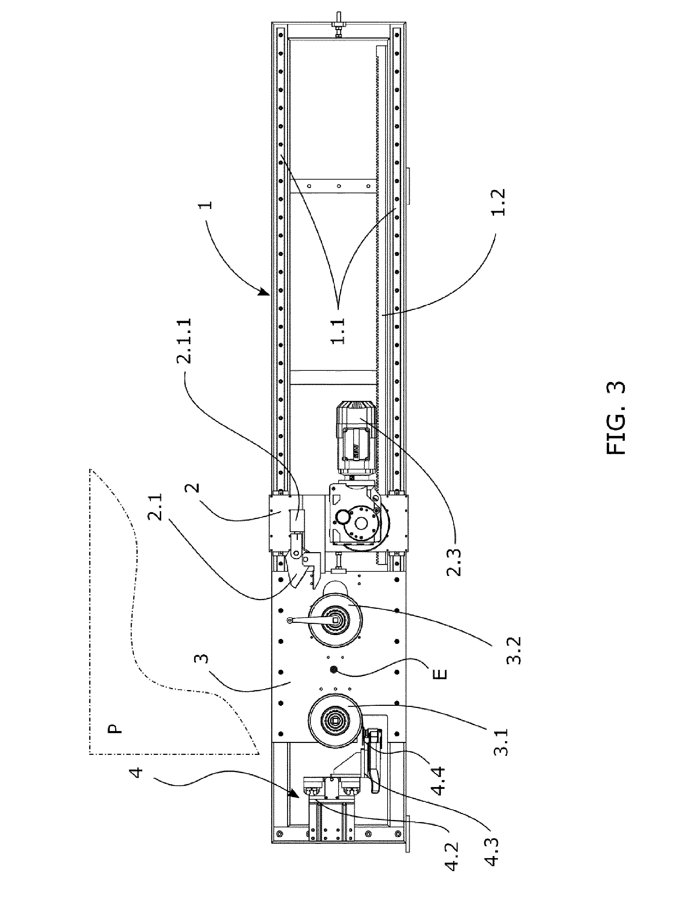

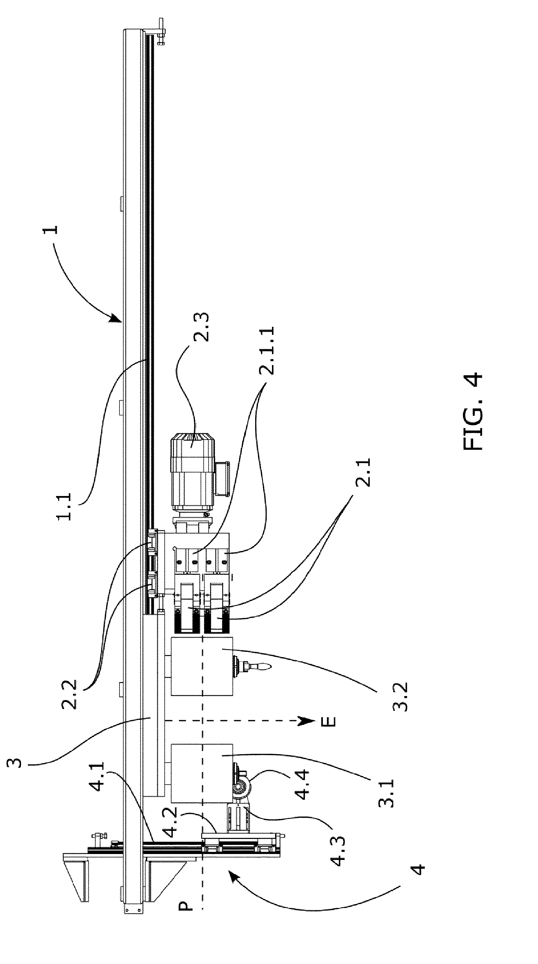

Figures 3 and 4 depict the same embodiment in elevational and plan views, respectively. Said figures allow a better understanding of the device according to this embodiment.

In another embodiment, the support (2) comprising securing means (2.1) for securing a section of tread band (K) comprises a roller or cylinder, such that the tread band is separated as a result of winding the tread band (K) on said roller or cylinder.

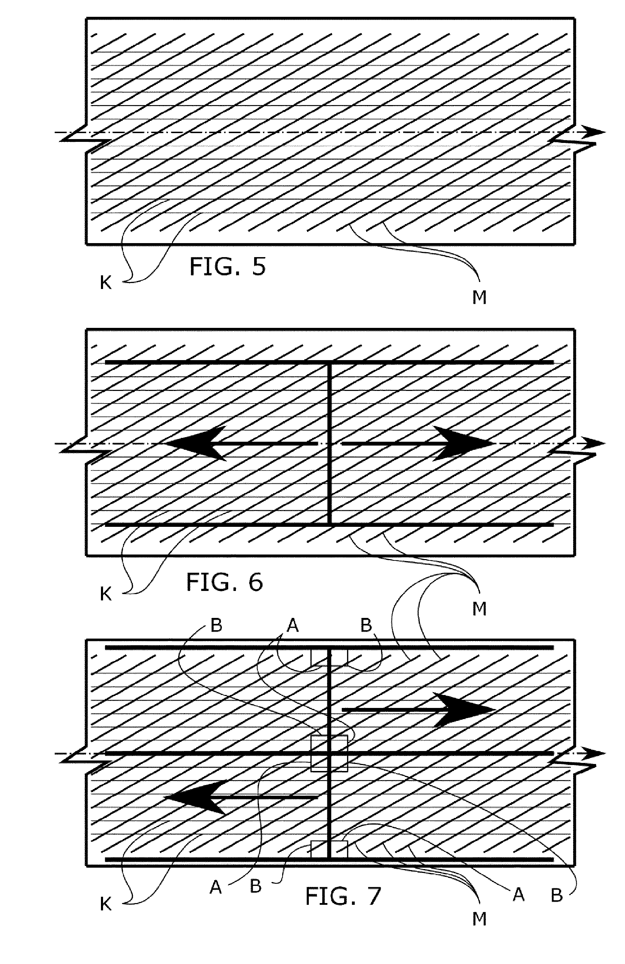

Figure 5 schematically shows the development of the tread band (K) depicting the projection of the metal mesh (M) underlying the tread band (K). According to this development, the tread band (K) is shown according to a rectangular section extending longitudinally according to the axis E. In this embodiment the fibers of the tread band (K) are depicted by means of thin longitudinal lines, and they are therefore parallel to the axis E. As mentioned, said textile fibers do not exist in truck tires (N). The metal mesh (M) underlying the tread band (K) is depicted by means of thick lines. There is a rubber separation layer between the tread band (K) and the metal mesh (M). The objective is to get the crack generating the surfaces by means of separating the tread band (K) to progress through the rubber leaving the fibers of the tread band (K) and the metal mesh (M) embedded in the rubber.

This device allows two implementation modes for carrying out the removal method for removing tread band (K). The first implementation method is described below.

The mentioned cuts are initially made on a tire (N); first the two perimetral cuts which could have been made beforehand to remove an element from the tire (N). In the case of tires (N) with textile fibers in the tread band (K), perimetral cuts are not necessary, but they facilitate the lateral limitation of the extension of the cut and will always allow a clean cut. If perimetral cuts are not made on the torn surfaces certain burr will remain. In this first implementation method and first embodiment, care must be taken so that the perimetral cuts are made such that they do not transversely and outwardly exceed on the tread band (K) the edges of the metal mesh (M). Thus, when the tread band (K) is removed, the edges of the metal mesh (M) will be trapped in the rubber on the sidewalls of the tire (N) and will not be removed or ripped together with the tread band (K). According to this cutting strategy, the rubber keeping the ends of the metal mesh (M) embedded secures the mesh, preventing the ends from emerging and being exposed. In different embodiments of the invention, the cuts can also be made simultaneously during the removal to facilitate separating between layers, or no cuts are made, for example in the case of a tread band (K) with textile fibers embedded therein.

This description will be more clearly understood in view of Figure 6, where a schematic depiction of a tire (N) according to Figure 5 is shown on which the mentioned cuts and the pulling direction are identified. In this case it is possible to start tearing the tread band in any of the directions.

According to an embodiment, for the correct removal of the tread band (K) the tire (N) is placed surrounding the rollers (3.1, 3.2), the movable roller (3.2) is then separated such that the tire (N) is fixed. In this embodiment the cutting tool (4.4) in the form of a circular blade (4.4) makes the next transverse cut to generate a section of tread band (K) susceptible to being secured by the clamps (2.1) operated by actuators (2.1.1). Said section is secured by the clamps (2.1) and the motor (2.3) moves the support (2), moving it away from the tire (N) located in the rollers (3.1, 3.2). While the clamps (2.1) are pulling the section of tread band (K), these rollers (3.1, 3.2) rotate freely with respect to their main axis to favor tearing along the perimetral cuts which have generated a ripping origin, gradually separating the tread band (K) from the rest of the tire (N).

In this case, both clamps (2.1) grip the entire tread band (K) at the same time, separating the assembly. The movement path of the support (2) of the clamps (2.1) is thus rectilinear and preferably parallel to the main plane (P) of the tire (N) because if it was oblique, which is the direction of the fibers of the metal mesh (M), undesirable tearing of the latter as well could occur. In this embodiment the movement path of the support (2) of the clamps (2.1) is spaced from the axis of rotation of the tire (N) when the tire (N) is fixed in the operating position, i.e., the axis perpendicular to the main plane (P) of the tire N). This allows the pulling direction to be tangent to the tire (N) and results in greater control over tearing.

In the described implementation methods, in one embodiment, pulling the section of tread band (K), generating a progressive ripping, is aided by a prior or simultaneous cut which favors separating the layers in a quicker and more efficient manner.

In another embodiment, the second implementation method starts by making the mentioned perimetral cuts on the tire (N); first the two perimetral cuts which could have been made beforehand to remove an element from the tire (N). In this second implementation method, the perimetral cuts can be made on the sidewall or outwardly exceeding the edges of the metal mesh (M) as shown in Figure 7.

To better understand this method the perimetral cuts and other cuts made can be seen in Figure 7. The sequential order of making the cuts is irrelevant because the chosen order is merely to facilitate the explanation.

In this second method the initial steps coincide, i.e., the tire (N) is secured in the rollers (3.1, 3.2), the transverse cut is made and they are tensed. Figure 7 depicts the transverse cut which in this particular case is perpendicular to the first perimetral cuts.

An additional longitudinal cut is then made along the tread band (K) with a cut trajectory preferably coinciding with the intersection of the tread band (K) with a plane parallel to the main plane of the tire (N), for example in the central part of the tire (N). The same Figure 7 depicts the cut in the tread band (K) coinciding with the axis E. This cut leaves two half-tread bands on either side.

Next, only the section of one of the half-tread bands (K) is secured and, like in the preceding implementation method, the motor (2.3) moves the support (2), moving it away from the tire (N) which is located in the rollers (3.1, 3.2). While the clamps (2.1) are pulling the section of tread band (K), these rollers (3.1, 3.2) rotate to favor tearing along the perimetral and longitudinal cuts, gradually separating the half-tread band (K) from the rest of the tire (N).

The other section of tread band (K) is subsequently secured with a clamp (2.1) and pulled in the opposite direction until completely separating the other half-tread band (K). This step can also be performed by turning the tire (N) over and pulling the tire (N) in the same direction as the half-tread band (K) above.

The selection of which half-tread band (K) is chosen and the pulling direction are determined by certain conditions which are explained below. The transverse cut results in a start and an end of each half-tread band (K) separated by the additional longitudinal cut. Both the start and the end of the half-tread band (K) have two corners. The projection of the metal mesh (M) allows distinguishing between these two corners, a corner identified with the letter A is the corner in which the projection lines of the metal mesh (M) converge, and the opposite corner is identified with the letter B.

For one and the same half-metal mesh (M), the start of the half-metal mesh (M) is considered to be the portion having corner A where the projection lines of the metal mesh (M) adjacent to the axis E converge, inside the tread band (K), and at the end of the half-metal mesh (M), this same corner is on the outside, adjacent to the sidewall of the tire (N).

The pulling direction will always be such that the tearing is caused in the rubber between the tread band (K) and the metal band (M) from the section which has been identified as the start of the metal band (M) until the section which has been identified as the end of the half-metal band (M). Corner A indicated in Figure 7 is chosen to prevent the tearing of the fibers of the metal mesh (M) as the tread band (K) is pulled in the direction of the fibers. In other words, pulling takes place at the point of fibers of the metal mesh (M) where the start thereof is partially embedded in rubber so the metal fibers will be fixed to the rest of the tire (N).

As mentioned, in one embodiment this second method can also be aided with a cut prior to or at the same time as the progressive ripping to facilitate separating the layers.

In one embodiment of the invention, after removing the tread band (K) from the tire (N), if there is a casing (C), the casing (C) is removed to obtain at least one metal band (M). As mentioned at the beginning, a tire (N) will be formed by at least 3 layers: the tread band (K), which can be formed by textile fibers embedded in rubber or only rubber in the case of truck tires; the metal mesh or band (M) formed by a generally oblique framework of metal wires; and the casing (C) on which the other two layers are arranged. As indicated by the name, the fibers of the casing (C) in radial tires are radial fibers. Depending on the type of vehicle, the tire (N) can contain more than one metal mesh (M) and more than one tread band (K).

## Claims

1. A removal device for removing tread band (K) from a tire (N) or part thereof, wherein the device comprises:
• fixing means (3.1, 3.2) for fixing the tire (N), such that they allow the rotation of the tire (N) about an axis (E) perpendicular to its main plane (P),
• a support (2) comprising securing means (2.1) for securing a section of tread band (K),
• driving means (2.3) for driving the support (2) of the securing means (2.1) for pulling the tread band (K) with respect to the tire (N) when it is located in the fixing means (3.1, 3.2) in the operating mode,
**characterized in that** the pulling direction imposed by the securing means (2.1) on the tread band (K) is such that it favors removing the tread band (K) by ripping, separating the fibers of the tread band (K) from the rest of the tire (N).

2. The device according to claim 1, **characterized in that** it comprises guides (1.1) for moving the support (2) such that the driving means (2.3) allow moving the support (2) away from or closer to the tire (N) when it is located in the fixing means (3.1, 3.2) in the operating mode.

3. The device according to claim 2, **characterized in that** the movement path of the support (2) of the securing means (2.1) is rectilinear and preferably parallel to the main plane (P) of the tire (N) when the tire (N) is fixed in the operating position.

4. The device according to claim 3, **characterized in that** the movement path of the support (2) of the securing means (2.1) is spaced from the axis (E) of rotation of the tire (N) when the tire (N) is fixed in the operating position.

5. The device according to any of claims 2 to 4, **characterized in that** the support (2) comprising the securing means (2.1) is a mobile carriage movable on slides (2.2) and is driven by a hydraulic assembly or rack (1.2) and pinion (2.3.1) assembly, where the pinion (2.3.1) is driven by a motor (2.3).

6. The device according to claim 1, **characterized in that** the movement path of the support (2) of the securing means (2.1) is circular for winding the tread band (K) and preferably parallel to the main plane (P) of the tire (N) when the tire (N) is fixed in the operating position.

7. The device according to claim 6, **characterized in that** the support (2) comprising the securing means (2.1) comprises a cylinder for winding the tread band (K).

8. The device according to claim 1, **characterized in that** the securing means for securing the section of tread band (K) are one or more clamps (2.1) operated by actuators (2.1.1).

9. The device according to any of the preceding claims, **characterized in that** it further comprises a cutting device actuated prior to or at the same time as the ripping, accompanying the pulling movement of the securing means (2.1) due to the actuation of the driving means (2.3).

10. The device according to claim 1, **characterized in that** it comprises a cutting tool (4.4) arranged for acting on the tread band (K) of the tire (N).

11. The device according to claim 10, **characterized in that** the cutting tool (4.4) is linked to a floating support (4.2) capable of moving parallel to the axis (E) of rotation of the tire (N).

12. The device according to claim 10 or 11, **characterized in that** the cutting tool (4.4) is linked to a positionable support (4.3) allowing at least two positions:
• a first position such that it allows the cutting tool (4.4) to be positioned for making a cut on the tread band (K) in a transverse direction; and,
• a second position such that it allows the cutting tool (4.4) to be positioned for making a cut on the tread band (K) in a longitudinal direction.

13. The device according to claims 11 and 12, **characterized in that** the positionable support (4.3) is fixed on the floating support (4.2).

14. The device according to claim 1, **characterized in that** the fixing means for fixing the tire (N) such that they allow the rotation of the tire (N) about an axis perpendicular to its main plane comprise two rollers (3.1, 3.2) capable of rotating about their axis, a first roller (3.1) at least one of them movable to allow separating both rollers (3.1, 3.2) from one another, where the rollers (3.1, 3.2) are adapted for being located such that they internally support the tire (N) and such that the tire (N) is fixed by means of separating the rollers (3.1, 3.2) from one another.

15. A removal method for removing tread band (K) from a tire (N) or part thereof comprising the following steps:
a. making one or more cuts on the tread band (K) in a direction transverse to said tread band (K) such that the depth of the cut does not reach the metal mesh (M) of the tire (N),
b. making one or more cuts such that a first section of tread band (K) separated from the rest of the tire (N) is generated,
c. applying a pulling force on the section of tread band (K) previously separated from the rest of the tire (N) causing the progressive ripping of the tread band (K) and maintaining pulling in one direction such that it has a projection perpendicular to the surface generated in the tire (N).

16. The removal method according to claim 15, **characterized in that** at least in the case of a tire without textile fibers, it comprises the step of making two perimetral cuts, one on each sidewall of the tire (N), such that they laterally limit the extension of the ripping for the tread band (K).

17. The removal method according to claim 15, **characterized in that** pulling the section of tread band (K), generating a progressive ripping, is previously or simultaneously aided with a cut.

18. The method according to claim 15, **characterized in that** before carrying out ripping step d), a longitudinal cut is made along the tread band (K) with a cut path coinciding mainly with the intersection of the tread band (K) with a plane parallel to the main plane of the tire (N).

19. The method according to claim 15, **characterized in that** a first section of tread band (K) separated from the rest of the tire (N) is provided for the half-tread band (K) on one side of the longitudinal cut and a second section of tread band (K) separated from the rest of the tire (N) is provided for the other half-tread band (K) on the other side of the longitudinal cut where:
• the first section and the second section are arranged on either side of the longitudinal cut,
• the first section and the second section are arranged in different directions to encourage ripping to separate each of the half-tread bands (K) in opposite advance directions; and,
• the corner of the end of the half-tread band (K) adjacent to the longitudinal cutting line for both the first section and the second section corresponds to the corner where the orientation direction of metal mesh converges in projection.

20. The method according to any of claims 15 to 19, wherein if the tire (N) has a casing (C), the casing (C) is removed to obtain a metal band (M).
